# EUROPÄISCHE PATENTANMELDUNG

(11) **EP 4 718 631 A1**
(43) Veröffentlichungstag der Anmeldung: **01.04.2026**
(21) Anmeldenummer: 24203632.5
(22) Anmeldetag: 30.09.2024
(51) Int. Cl.: H01R 11/15, B25B 5/00, G01R 1/20, H01R 13/66, H01R 43/26, H02G 1/02

(54) **WERKZEUGMODUL, MONTAGEEINHEIT UND MONTAGESYSTEM FÜR DAS ERDEN UND KURZSCHLIESSEN EINER LEITUNG SOWIE VERFAHREN ZUM MECHANISCHEN KOPPELN EINES WERKZEUGMODULS MIT EINER KLEMME**

(71) Anmelder: DEHN SE, 92318 Neumarkt i.d. OPf. (DE)
(72) Erfinder: LANG, Bernhard, 92318 Neumarkt i.d.OPf. (DE); THUMMALACHARLA, Sairam, 92318 Neumarkt i.d.OPf. (DE); DAUM, Richard, 92318 Neumarkt i.d.OPf. (DE); STEHLE, Michael, 92318 Neumarkt i.d.OPf. (DE); WAFFLER, Michael, 92318 Neumarkt i.d.OPf. (DE)
(74) Vertreter: Prinz & Partner mbB

(57) **Zusammenfassung**

Ein Werkzeugmodul (14) für das Erden und Kurzschließen einer Leitung einer Hoch- oder Mittelspannungsanlage mittels mindestens einer Klemme (18), wobei das Werkzeugmodul (14) eine Verbindungsschnittstelle (26) aufweist, über die die Klemme (18) koppelbar ist. Das Werkzeugmodul (14) weist eine drahtlose Kommunikationseinheit (56) auf, die dazu eingerichtet ist, mindestens einen der Klemme (18) zugeordneten Klemmenparameter zu erfassen. Das Werkzeugmodul (14) ist dazu eingerichtet, in Abhängigkeit von dem über die Kommunikationseinheit (56) erfassten mindestens einen Klemmenparameter die Verbindungsschnittstelle (26) zu blockieren oder freizugeben.

## Beschreibung

Die vorliegende Erfindung betrifft ein Werkzeugmodul, eine Montageeinheit und ein Montagesystem für das Erden und Kurzschließen einer Leitung mittels mindestens einer Klemme. Zudem betrifft die Erfindung ein Verfahren zum mechanischen Koppeln eines Werkzeugmoduls mit einer Klemme.

Kurzschlussvorrichtungen zum Erden und Kurzschließen einer Leitung bestehen in der Regel aus einer Erdungsklemme, zur Montage an einem geerdeten Freileitungsmast oder anderen geerdeten metallischen Konstruktionen, und mindestens einer Phasenklemme, zur Montage an einer freigeschalteten Freileitung. Beide Klemmen sind mit einem flexiblen elektrischen Leiter, auch Kurzschlusskabel genannt, mit ausreichender Stromtragfähigkeit verbunden. Die Klemmen und der Leiter, die zusammen die Kurzschlussvorrichtung bilden, werden in der Regel als eine feste Einheit eingesetzt, wobei die mindestens drei Komponenten fest miteinander verschraubt transportiert und montiert bzw. demontiert werden.

Zur Montage der Kurzschlussvorrichtung wird zunächst die Erdungsklemme mit Erde verbunden, beispielsweise mit einer Schutzerdung ("protective earth" - PE). Danach wird die Phasenklemme mit Hilfe eines mechanischen Adapters mit einer Erdungsstange gekoppelt und an der Freileitung durch Drehbewegung fixiert. Die Demontage der Kurzschlussvorrichtung erfolgt dann in umgekehrter Reihenfolge, da zunächst die Phasenklemme von der Freileitung entfernt wird und anschließend die Erdungsklemme von der Erde entfernt wird. Die Montage und Demontage der Kurzschlossvorrichtung erfolgt typischerweise durch den Monteur vor Ort. Da die Montage der Klemmen an einer Hoch- oder Mittelspannungsleitung stattfindet, ist es zwingend notwendig, Sicherheitsvorkehrungen zu treffen, um die Arbeitssicherheit zu gewährleisten, wobei insbesondere die feste Montagereihenfolge eingehalten werden muss.

Ein weiterer Aspekt, der hinsichtlich der Arbeitssicherheit relevant ist, ist ein vordefiniertes Anzugsdrehmoment, mit dem die Phasenklemme an der Leitung und die Erdungsklemme an der Erde befestigt werden muss. Das ist besonders wichtig um einen sicheren elektrischen Kurzschluss zwischen Leitung und Erde herzustellen. Das Anzugsdrehmoment der Klemmen wird durch den Hersteller der Kurzschlussvorrichtung definiert.

Aufgabe der vorliegenden Erfindung ist es, ein Werkzeugmodul und eine Montageeinheit für das Erden und Kurzschließen einer Leitung und ein Verfahren zum mechanischen Koppeln eines Werkzeugmoduls mit einer Klemme bereitzustellen, die die Arbeitssicherheit beim Arbeiten an Hoch- und Mittelspannungsanlagen erhöhen.

Die Aufgabe wird erfindungsgemäß gelöst durch ein Werkzeugmodul für das Erden und Kurzschließen einer Leitung einer Hoch- oder Mittelspannungsanlage mittels mindestens einer Klemme, wobei das Werkzeugmodul eine Verbindungsschnittstelle aufweist, über die die Klemme koppelbar ist. Das Werkzeugmodul weist ferner eine drahtlose Kommunikationseinheit auf, die dazu eingerichtet ist, mindestens einen der Klemme zugeordneten Klemmenparameter zu erfassen. Das Werkzeugmodul ist dazu eingerichtet, in Abhängigkeit von dem über die Kommunikationseinheit erfassten mindestens einen Klemmenparameter die Verbindungsschnittstelle zu blockieren oder freizugeben

Unter dem Begriff Klemme ist im Folgenden sowohl eine Phasenklemme, als auch eine Erdungsklemme zu verstehen. Beide Klemmen können entweder direkt mit dem Werkzeugmodul gekoppelt werden oder indirekt über beispielsweise einen Klemmenadapter mit dem Werkzeugmodul verbunden werden. Damit ist die Verbindungsschnittstelle dazu eingerichtet, sowohl mit einer Phasenklemme als auch mit einer Erdungsklemme oder einem Klemmenadapter gekoppelt zu werden.

Ein Klemmenparameter ist beispielsweise eine Identifizierung, die Art der Klemme, also Phasenklemme oder Erdungsklemme und/oder der Zustand der Klemme, also offen oder geschlossen und/oder eine Seriennummer der Klemme.

Die Erfindung beruht auf dem Grundgedanken, dass ein Koppeln des Werkzeugmoduls mit der Klemme, entweder direkt oder indirekt, nur dann möglich ist, wenn die Kommunikationseinheit den mindestens einen Klemmenparameter erfasst, basierend auf dem die Verbindungsschnittstelle freigegeben werden kann. Damit kann sicher und zuverlässig verhindert werden, dass eine Klemme montiert wird, wenn die Montagereihenfolge versehentlich nicht eingehalten wurde und beispielsweise versucht wird, zuerst die Phasenklemme und anschließend die Erdungsklemme zu montieren bzw. zuerst die Erdungsklemme und anschließend die Phasenklemme zu demontieren. In einem solchen Fall würde die Verriegelung die Verbindungsschnittstelle nicht freigeben und eine Kopplung zwischen Werkzeugmodul und Klemme wäre nicht möglich.

Die Verbindungsschnittstelle des Werkzeugmoduls wird also nur freigegeben, wenn es sich bei der zu koppelnden Klemme um die richtige Klemmenart, also Erdungsklemme oder Phasenklemme, und/oder um eine Klemme im richtigen Zustand, also geöffnet oder geschlossen, und/oder um die korrekte Klemme handelt, die anhand ihrer Seriennummer identifiziert werden kann. Über die Seriennummer der Klemme können auch Rückschlüsse auf die gesamte Kurzschlussvorrichtung gezogen werden, sodass anhand der Seriennummer auch die Kurzschlussvorrichtung identifiziert werden kann.

Die Kommunikationseinheit kann derart ausgebildet sein, dass eine drahtlose Kommunikation erfolgt.

Grundsätzlich kann die Kommunikationseinheit als NFC- und/oder Bluetooth-Kommunikationseinheit ausgebildet sein. Es können also auch beide Kommunikationsstandards von der Kommunikationseinheit abgedeckt werden oder weitere drahtlose Kommunikationsstandards.

Gemäß einem Aspekt der Erfindung kann die Kommunikationseinheit einen schleifenförmigen bzw. ringförmigen Leiter aufweisen, der am Werkzeugmodul angebracht ist, insbesondere wobei der schleifen- bzw. ringförmige Leiter als eine Antenne, beispielsweise eine NFC-Antenne, fungiert. In einer besonderen Ausgestaltung kann der schleifen- bzw. ringförmige als kreisringförmiger Leiter ausgebildet sein.

Der schleifen- bzw. ringförmige Leiter kann sich entweder innerhalb des Werkzeugmoduls oder an seiner Außenseite befinden. Insbesondere ist die Antenne der Kommunikationseinheit an der Außenseite des Werkzeugmoduls vorgesehen, wobei ein Prozessor der Kommunikationseinheit innerhalb des Werkzeugmoduls angeordnet ist. Ein als (NFC-)Antenne fungierender Leiter hat den Vorteil, dass jegliche Kommunikation drahtlos erfolgen kann, sodass ein direkter Kontakt zwischen dem Werkzeugmodul und dem Sender des mindestens einen Klemmenparameters nicht notwendig ist. Dadurch wird vor dem eigentlichen Kontakt der Klemme (direkt oder indirekt) mit dem Werkzeugmodul die Verbindungsschnittstelle im Falle einer nicht sicherheitskonformen Koppelung blockiert, sodass sich die Klemme gar nicht erst mit dem Werkzeugmodul koppeln lässt. Das erhöht die Arbeitssicherheit zusätzlich.

Die Kommunikationseinheit kann dabei einen Sender und/oder einen Empfänger aufweisen. Über die Kommunikationseinheit kann das Werkzeugmodul beispielsweise Sensordaten an einen Speicher und/oder Signale an die Klemme oder einen Klemmenadapter senden.

Darüber hinaus kann das Werkzeugmodul über die Kommunikationseinheit auch Daten wie mindestens einen Klemmenparameter, ein Anzugsdrehmoment, oder andere Sensordaten empfangen.

Ferner kann das Werkzeugmodul eine Auswerteeinheit aufweisen, die mit der Kommunikationseinheit gekoppelt und dazu eingerichtet ist, den der Klemme zugeordneten Klemmenparameter auszuwerten, um beispielsweise die Klemme zu identifizieren. Die Auswerteeinheit kann zusätzlich noch weitere Daten auswerten, beispielsweise Daten von Sensoren, die am oder im Werkzeugmodul angeordnet sind. Nach der Auswertung erzeugt die Auswerteeinheit ein Auswerteergebnis. Das Auswerteergebnis kann zur Steuerung des Werkzeugmoduls genutzt werden.

Gemäß einem weiteren Aspekt der Erfindung kann das Werkzeugmodul im Bereich der Verbindungsschnittstelle eine Verriegelung aufweisen, die dazu eingerichtet ist, in Abhängigkeit von dem über die Kommunikationseinheit erfassten Klemmenparameter die Verbindungsschnittstelle zu blockieren oder freizugeben. Somit wird die Verbindungsschnittstelle über die Verriegelung in Abhängigkeit von dem Auswerteergebnis der Auswerteeinheit blockiert oder freigegeben. Vorzugsweise weist das Werkzeugmodul einen Antrieb auf, der mit der Verriegelung zusammenwirkt und basierend auf dem Auswerteergebnis der Auswerteeinheit angesteuert wird.

Der Antrieb kann ein elektrischer Motor, ein Spulenantrieb und/oder ein Servoantrieb sein. Der Motor ist vorzugsweise zentral im Werkzeugmodul angeordnet.

Die Verriegelung und der Antrieb stellen demnach zusammen ein Sperrsystem bereit, das eine falsche Nutzung verhindert, da die vorgegebene Montage- bzw. Demontagereihenfolge eingehalten werden muss. Dies erhöht den Arbeitsschutz.

Die Verriegelung kann mindestens ein Verriegelungselement aufweisen, das über den Antrieb mechanisch verstellbar ist. Insbesondere ist das mindestens eine Verriegelungselement ein Halbstift, ein Blockierstift und/oder ein Bolzen. Mit anderen Worten wird das mindestens eine Verriegelungselement durch den Antrieb so verstellt bzw. verlagert, dass es zumindest teilweise die Verbindungsschnittstelle blockiert und damit verhindert, dass die Klemme mit dem Werkzeugmodul gekoppelt wird, wenn zu diesem Zeitpunkt keine Kopplung stattfinden darf, beispielsweise weil versucht wird, die falsche Klemme mit dem Werkzeugmodul zu koppeln. Insbesondere wird das mindestens eine Verriegelungselement durch Drehen verstellt. Alternativ kann das mindestens eine Verriegelungselement auch verschoben oder ein- und ausgefahren werden. Hinsichtlich der Form des Verriegelungselements sind unterschiedliche Formen vorstellbar, sofern die Form ein Blockieren der Verbindungsschnittstelle ermöglicht. Wichtig ist nur, dass das mindestens eine Verriegelungselement die Verbindungsschnittstelle zumindest teilweise blockieren kann und so eine (direkte oder indirekte) Kopplung zwischen Werkzeugmodul und Klemme verhindert, wenn diese aus Sicherheitsgründen nicht stattfinden darf.

Grundsätzlich muss die Verbindungsschnittstelle nicht vollständig blockiert sein, es reicht aus, wenn die Verbindungsschnittstelle teilweise blockiert ist, sodass eine direkte oder indirekte Koppelung der Klemme nicht mehr möglich ist.

Die Verriegelung kann mehrere Verriegelungselemente aufweisen, die über ein Getriebe gemeinsam verstellbar sind. Der Motor, der im Werkzeugmodul angeordnet ist, treibt dabei das Getriebe an, sodass die Verriegelungselemente verstellt oder verdreht werden und entweder die Verbindungsschnittstelle blockieren oder freigeben. Bei mehreren Verriegelungselementen werden die Verriegelungselemente vorzugsweise synchron, also gleichzeitig, durch den Antrieb verstellt, sodass alle Verriegelungselemente die Verbindungsschnittstelle gleichzeitig blockieren oder gleichzeitig freigeben. Das Getriebe kann ein zentrales Antriebsritzel aufweisen, mit dem der Antrieb gekoppelt ist, sowie weitere Zahnräder, die vom Antriebsritzel synchron angetrieben werden. Die Verriegelungselemente sind den weiteren Zahnrädern zugeordnet, insbesondere mit diesen verbunden.

Gemäß einem weiteren Aspekt der Erfindung kann das Werkzeugmodul mindesten einen Sensor aufweisen, insbesondere einen elektrischen Felddetektor, der eingerichtet ist, ein elektrisches Feld zu detektieren, und/oder einen Drucksensor, der dazu eingerichtet ist, einen Druck, der auf das Werkzeugmodul ausgeübt wird, zu detektieren.

Der mindestens eine Sensor, der im Werkzeugmodul oder entlang einer Außenseite des Werkzeugmoduls verbaut sein kann, kann ein elektronischer Drehmomentsensor sein, mit dem das über das Werkzeugmodul übertragene Drehmoment ermittelt werden kann. Dieser Sensor ist dazu beispielsweise als ein Drucksensor ausgebildet, der an und/oder in einer Wand einer Aufnahme des Werkzeugmoduls angeordnet ist, insbesondere dem Boden oder einer Seitenwand der Aufnahme. Bei einer Drehung der Klemme bzw. des Klemmenadapters drückt diese mit einem messbaren Druck auf die Wand der Aufnahme. Der Sensor misst den Druck und beispielsweise über die Auswerteeinheit kann aus dem gemessenen Druck und einer bekannten Kontaktfläche, die im Wesentlichen der Sensorfläche entspricht, eine ausgeübte Kraft ermittelt werden. Aus der ermittelten Kraft kann anschließend zusammen mit dem Radius, der dem Abstand des Drucksensors von der Drehachse entspricht, das Drehmoment berechnet werden.

Generell kann das Drehmoment über einen Sensor an einem Punkt erfasst werden, über den das Drehmoment übertragen werden muss, beispielsweise im Bereich einer Handhabungsschnittstelle, über die die Erdungsstange mit dem Werkzeugmodul gekoppelt werden kann. Der Sensor kann also an einem Fußpunkt des Werkzeugmoduls vorgesehen sein. Beispielsweise wird ein Abschnitt des Werkzeugmoduls senkrecht zur Drehachse in zwei Bereiche unterteilt, die geringfügig gegeneinander verdreht werden können. Die Bewegungstoleranz kann durch zumindest einen Endanschlag begrenzt werden, insbesondere durch zwei mechanische Endanschläge, wobei jeweils ein Endanschlag pro Drehrichtung vorgesehen ist. Sofern zwei Endanschläge vorgesehen sind, können auch zwei Sensoren vorgesehen sein, die jeweils einem Endanschlag zugeordnet sind. Der jeweilige Endanschlag übt beim Verdrehen des Werkzeugmoduls eine Kraft auf den entsprechenden Sensor aus. Die Anordnung des Sensors im Bereich der Handhabungsschnittstelle bzw. im Fußpunkt des Werkzeugmoduls hat den Vorteil, dass der zumindest eine Sensor im Werkzeugmodul gekapselt ist, sodass der zumindest eine Sensor vor Verschmutzung geschützt ist.

Der Drehmomentsensor kann auch als Endlagekontakte oder Dehnungsmessstreifen ausgebildet sein.

Alternativ oder zusätzlich kann der mindestens eine Sensor auch ein elektrischer Felddetektor sein, der wiederum die Arbeitssicherheit weiter erhöht. Der Sensor detektiert elektrische (Wechsel-)Felder und erfasst einen Verschiebungsstrom. Physikalisch ähnelt seine Sensorik dem Messprinzip bei einer Abstandsspannungsprüfung. Im Falle einer freigeschalteten Leitung geht von der Leitung kein oder nur ein geringes elektrisches Feld aus. Der elektrische Felddetektor führt beim Annähern an die Leitung eine Messung auf Spannungsfreiheit durch. Im Falle eines vorausgegangenen Fehlers, wie bei einer vertauschten Leitung, kann der Sensor bei Annäherung des Werkzeugmoduls an die Leitung ein vorhandenes elektrisches Feld detektieren. Das Sensorsignal kann anschließend von der Auswerteeinheit ausgewertet werden, sodass bereits bei der Annäherung des Werkezugadapters mit der Klemme, und damit vor dem Entstehen eines potenziell gefährlichen Lichtbogens ein Signal erzeugt wird, das vom Werkzeugmodul ausgegeben wird und den Monteur vor der drohenden Gefahr durch einen Lichtbogen warnt. Ein solcher Felddetektor kann als ein schleifen- bzw. ringförmiger Sensor ausgebildet sein, der am Ende des Fangtrichters angeordnet ist. Alternativ kann der Sensor auch mehrere einzelne Elemente umfassen, die am Fangtrichter, an einer Außenfläche des Werkzeugmoduls oder innerhalb des Werkzeugmoduls vorgesehen sind.

Zudem kann das Werkzeugmodul einen Beschleunigungs- und/oder Drehratensensor aufweisen. Mit dem Beschleunigungssensor können harte Stöße oder der freie Fall des Werkzeugmoduls erfasst werden. Mit diesen Daten kann dann auf die Beanspruchung des Werkzeugmoduls im Betrieb geschlossen werden, um die daraus abzuleitenden Wartungsmaßnahmen zu unterstützen. Der Drehratensensor kann die Drehbewegung beim Anziehen bzw. Lösen der Klemme(n) erfassen. In Kombination beider Sensoren kann bei anhaltender Detektion einer bewegungslosen Lage auf eine Arbeitsruhe geschlossen werden, in der der Energieverbrauch der Elektronik reduziert werden kann, um somit die Batterielaufzeit zu verlängern. Der Beschleunigungs- und/oder Drehratensensor können bzw. kann als mikromechanische(r) Sensor(en), sogenannte MEMS, ausgelegt sein.

Die Kommunikationseinheit kann gemäß einem weiteren Aspekt der Erfindung dazu eingerichtet sein, Sensordaten und/oder Signale zu senden und/oder zu empfangen, insbesondere Daten bezüglich eines Anzugsdrehmoments, eines Drucks, einer Kraft, und/oder eines elektrischen Felds. Die Kommunikationseinheit steht damit in informationsaustauschender Verbindung mit dem mindestens einen Sensor und kann die empfangenen Sensordaten an die Auswerteeinheit weiterleiten, wo sie anschließend ausgewertet werden. Darüber hinaus kann die Kommunikationseinheit auch Signale beispielsweise von externen Speichern auslesen und entsprechend die Verriegelung ansteuern.

Die Aufgabe wird erfindungsgemäß auch durch eine Montageeinheit für das Erden und Kurzschließen einer Leitung einer Hoch- oder Mittelspannungsanlage mittels einer Klemme gelöst, wobei die Montageeinheit mindestens einen Klemmenadapter und das zuvor beschriebene Werkzeugmodul umfasst. Der Klemmenadapter weist ein Identifikationsmittel auf, das den Klemmenparameter bereitstellt. Die Kommunikationseinheit ist dazu eingerichtet, das Identifikationsmittel des Klemmenadapters auszulesen.

Für den Fall, dass ein Klemmenadapter vorliegt, ist die Klemme indirekt mit dem Werkzeugmodul gekoppelt, nämlich über den Klemmenadapter. Eine Gewindespindel der Klemme wird dazu mit dem Klemmenadapter an seiner Klemmenschnittstelle fixiert, sodass über den Klemmenadapter die Gewindespindel der Klemme bewegbar ist. Über eine Anbindungsschnittstelle steht der Klemmenadapter mit der Verbindungsschnittstelle in einem gekoppelten Zustand in direktem Kontakt.

Das Identifikationsmittel umfasst nichtflüchtige elektronische Speicherelemente, die beispielsweise per drahtloser Nahfeldkommunikation (NFC-Tag) aktiviert, erkannt, gelesen und/oder beschrieben werden können. Zusammen mit der Kommunikationseinheit des Werkzeugmoduls können so Daten von dem Klemmenadapter an das Werkzeugmodul über die in beide Richtungen übertragen werden.

Das Identifikationsmittel dient damit der (digitalen) Identifizierung der Klemme und zumindest indirekt der Identifizierung der Kurzschlussvorrichtung.

Neben der reinen Datenübertragung kann die Kommunikationseinheit des Werkzeugmoduls auch dazu eingerichtet sein, das Identifikationsmittel des Klemmenadapters zu beschreiben. So kann auf dem Identifikationsmittel der aktuelle Zustand der Klemme hinterlegt werden, also offen oder geschlossen, oder die aktuelle Position der Klemme auf dem Identifikationsmittel abgespeichert werden, also an Freileitung bzw. Erde befestigt bzw. nicht befestigt. Das bietet den Vorteil, dass bei oder nach der Montage bzw. Demontage jeweils automatisch die Klemmenparameter aktualisiert werden.

Erfindungsgemäß wird die Aufgabe auch durch ein Verfahren zum mechanischen Koppeln eines Werkzeugmoduls mit einer Klemme zum Erden und Kurzschließen einer Leitung einer Hoch- oder Mittelspannungsanlage gelöst, wobei das Verfahren die folgenden Schritte aufweist.

In einem ersten Schritt wird das Werkzeugmodul, wie es zuvor beschrieben wurde, bereitgestellt.

Danach wird die Klemme mit einem daran gekoppelten Klemmenadapter an das Werkzeugmodul angenähert. Ein direkter Kontakt ist nicht notwendig, da die Klemmenparameter per drahtloser Kommunikation, beispielsweise NFC, auch in einem Abstand noch erfolgreich von dem Klemmenadapter an das Werkzeugmodul übertragen werden können. Im Fall von NFC kann der Abstand bis zu 10 cm betragen.

Anschließend wird mindestens ein Klemmenparameter aus einem Identifikationsmittel des Klemmenadapters mittels der Kommunikationseinheit ausgelesen.

Mit einer Auswerteeinheit des Werkzeugmoduls wird der ausgelesene Klemmenparameter ausgewertet, um ein Auswerteergebnis zu erzeugen. Das Auswerteergebnis kann weiter verwendet werden, um zumindest eine Komponente des Werkzeugmoduls in Abhängigkeit des Auswerteergebnisses anzusteuern.

Abhängig vom Auswerteergebnis kann entweder die Verriegelung angesteuert werden, sodass die Verbindungsschnittstelle freigegeben wird, oder die Verriegelung wird in ihrer Position belassen, sodass die Verbindungsschnittstelle weiterhin blockiert bleibt. Bei freigegebener Verbindungsschnittstelle wird der Klemmenadapter mit dem Werkzeugmodul gekoppelt und anschließend wird die Verriegelung wieder gesperrt, sodass eine drehfeste mechanische Verbindung zwischen der Klemme und dem Werkzeugmodul hergestellt ist.

Die Verbindungsschnittstelle des Werkzeugmoduls kann eine Aufnahme für den Klemmenadapter aufweisen, wobei der Klemmenadapter eine zur Aufnahme korrespondierende Form aufweist, sodass eine mechanisch drehfeste Verbindung zwischen dem Werkzeugmodul und dem Klemmenadapter in einem gekoppelten Zustand vorliegt. Der Klemmenadapter und das Werkzeugmodul bzw. die Verbindungsschnittstelle sind also hinsichtlich ihrer Form optimal aufeinander abgestimmt. Das Verwenden eines Klemmenadapters hat darüber hinaus den Vorteil, dass keine spezielle Klemme oder ein jeweils speziell auf die Klemme abgestimmtes Werkzeugmodul notwendig ist. Vielmehr ist es ausreichend, wenn der Klemmenadapter und das Werkzeugmodul aufeinander abgestimmt sind. Mit der Montageeinheit kann daher jede übliche Klemme verwendet werden und über die Klemmenschnittstelle mit dem Klemmenadapter gekoppelt werden. Der Klemmenadapter wird wiederum über den Anbindungsabschnitt mit der Verriegelung des Werkzeugmoduls gekoppelt, an dem die Erdungsstange angebracht werden kann. Somit wird eine mechanisch drehfeste Verbindung zwischen Klemme und Erdungsstange bereitgestellt, wobei jede Klemme mit dem universellen Werkzeugmodul koppelbar ist.

Der Klemmenadapter und die Verbindungsschnittstelle des Werkzeugmoduls können ineinander steckbar sein.

Sofern das Werkzeugmodul die Aufnahme hat, so weist der korrespondierende Klemmenadapter einen Einsteckabschnitt auf, über den der Klemmenadapter in die Verbindungsschnittstelle gesteckt wird. Ist die Verbindungsschnittstelle an einem freien Ende des Werkzeugmoduls ausgebildet, so weist der korrespondierende Klemmenadapter eine Einstecköffnung auf, in die die Verbindungsschnittstelle eingesteckt wird. Es ist also grundsätzlich ein einfaches und sicheres Ineinanderstecken von Werkzeugmodul und Klemmenadapter ermöglicht, was das Koppeln über Kopf erleichtert. Das Ineinanderstecken wird zudem durch den Fangtrichter erleichtert. Der Fangtrichter kann, wenn die Verbindungsschnittstelle am freien Ende des Werkzeugmoduls ausgebildet ist, auch am Klemmenadapter angeordnet sein, nämlich an die Einstecköffnung anschließend. Das bietet den Vorteil, dass der Kopplungsprozess über Kopf besser optisch verfolgt werden kann.

Der Klemmenparameter kann der Zustand der Klemme, die Art der Klemme, und/oder eine Seriennummer der Klemme repräsentieren. Folglich erfolgt eine Kopplung zwischen Klemmenadapter und Werkzeugmodul beispielsweise nur, wenn es sich beispielsweise um die richtige Klemme im richtigen Zustand handelt.

Grundsätzlich kann das Auswerteergebnis genutzt werden, um die Verriegelung anzusteuern. Zudem kann aber auch eine haptische, akustische und/oder optische Schnittstelle entsprechend angesteuert werden, um eine direkte Rückmeldung an den Nutzer des Werkzeugmoduls zu geben, beispielsweise eine Anzeige, ein Leuchtmittel, ein Lautsprecher oder ein Vibrationselement. Ebenso kann das Auswerteergebnis genutzt werden, um über die Kommunikationseinheit ein Signal an ein separat ausgebildetes Gerät zu übermitteln, worüber die entsprechende Rückmeldung erfolgt, also die haptische, akustische und/oder optische Rückmeldung.

Gemäß einem Aspekt der Erfindung kann das Werkzeugmodul mit einem Speicher verbunden sein, in dem der Klemmenparameter der Klemme gespeichert wird. Vorzugsweise ist der Speicher ein zum Werkzeugmodul externer Speicher. Ebenfalls vorteilhaft ist, wenn im Speicher Klemmenparameter einer Vielzahl von Klemmen gespeichert werden können, insbesondere aller in der Kurzschlussvorrichtung verbauten Klemmen, beispielsweise einer mehrpoligen Kurzschlussvorrichtung.

Das Werkzeugmodul kann aus dem Speicher Klemmenparameter anderer Klemmen abrufen. Das ist besonders bei mehrpoligen Kurzschlussvorrichtungen von Vorteil. Über die Seriennummer der Klemme können auch Rückschlüsse auf die gesamte Kurzschlussvorrichtung gezogen werden, sodass anhand der Seriennummer auch die Kurzschlussvorrichtung identifiziert werden kann. Dies ist wichtig, wenn es sich um mehrpolige Kurzschlussvorrichtungen handelt. Bei mehrpoligen Kurzschlussvorrichtungen werden alle Klemmen einer Kurzschlussvorrichtung durch die Seriennummer der Kurzschlussvorrichtung eindeutig identifiziert und die Funktion der einzelnen Klemmen durch eine ergänzende eindeutige Zählernummer gekennzeichnet. Somit kann basierend auf der Seriennummer der Klemme die Kurzschlussvorrichtung identifiziert werden und anders herum.

Gemäß einem weiteren Aspekt der Erfindung kann die Kommunikationseinheit Daten in das Identifikationsmittel des Klemmenadapters schreiben, insbesondere wobei die Daten repräsentativ für einen Zustand der Klemme sind. Damit kann mittels der Kommunikationseinheit der Zustand der Klemme automatisch immer auf dem aktuellsten Stand gehalten werden, ohne dass es einen weiteren Arbeitsschritt benötigt. Darüber hinaus kann auch durch das automatische Aktualisieren des Zustands der Klemme verhindert werden, dass der Klemmenadapter bei einer erneuten Annäherung des Werkzeugmoduls an den Klemmenadapter einen fehlerhaften bzw. veralteten Zustand ausliest und fälschlicherweise beispielsweise die Verbindungsschnittstelle freigibt.

Ferner wird die Aufgabe erfindungsgemäß gelöst durch ein Montagesystem mit einem Werkzeugmodul und einem externen Speicher, wie vorstehend beschrieben, wobei die Kommunikationseinheit eingerichtet ist, Daten von dem Speicher abzufragen und/oder Daten auf dem Speicher abzuspeichern. Das ermöglich auch einem berechtigten Dritten von Extern auf die Daten zuzugreifen. So können Arbeitspläne erstellt, oder die Sensordaten protokolliert, ausgewertet und überprüft werden. In diesem Zusammenhang ist somit eine Kommunikation zwischen dem Werkzeugmodul und externen Servern oder Cloud-Anwendungen möglich. Demnach lassen sich die Auswerteergebnisse zentral oder von bestimmten Abteilungen auswerten, um beispielsweise einen Schulungsbedarf für Nutzer des Werkzeugmoduls zu identifizieren. Dies kann der Fall sein, sofern mehrfach festgestellt wird, dass der Nutzer die vorgegebene Reihenfolge bei der Montage bzw. Demontage der Klemmen nicht befolgen würde. Dies wird zwar aufgrund des Werkzeugmoduls wirkungsvoll verhindert, aber kann entsprechend protokolliert werden, um einen Schulungsbedarf zu identifizieren.

Weitere Vorteile und Ausgestaltungen ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Montageeinrichtung mit einem erfindungsgemäßen Werkzeugmodul;
- Figur 2 eine schematische Darstellung der Verbindungsschnittstelle mit einer Verriegelung des Werkzeugmoduls aus Figur 1;
- Figur 3; eine schematische Darstellung der Verriegelung aus Figur 2 samt Antrieb;
- Figur 4 eine vergrößerte Darstellung der Verbindungsschnittstelle aus Figur 2, mit Verriegelungselementen und Sensoren;
- Figur 5 eine schematische Darstellung des Funktionsprinzips eines Drucksensors in der Verbindungsschnittstelle aus Figur 4;
- Figur 6 eine schematische Darstellung eines Drucksensors im Bereich des Fußpunkts des Werkzeugmoduls,
- Figur 7 schematische Darstellung des Funktionsprinzips des Drucksensors aus Figur 6,
- Figur 8 eine schematische Darstellung eines erfindungsgemäßen Montagesystems mit dem Werkzeugmodul aus Figur 1;
- Figur 9 eine schematische Darstellung einer Montageunterstützung an einer Erdungsstange die mit dem erfindungsgemäßen Werkzeugmodul aus Figur 1 koppelbar ist; und
- Figur 10 eine schematische Darstellung eines Verfahrens zum Koppeln des Werkzeugmoduls mit dem Klemmenadapter aus Figur 1.

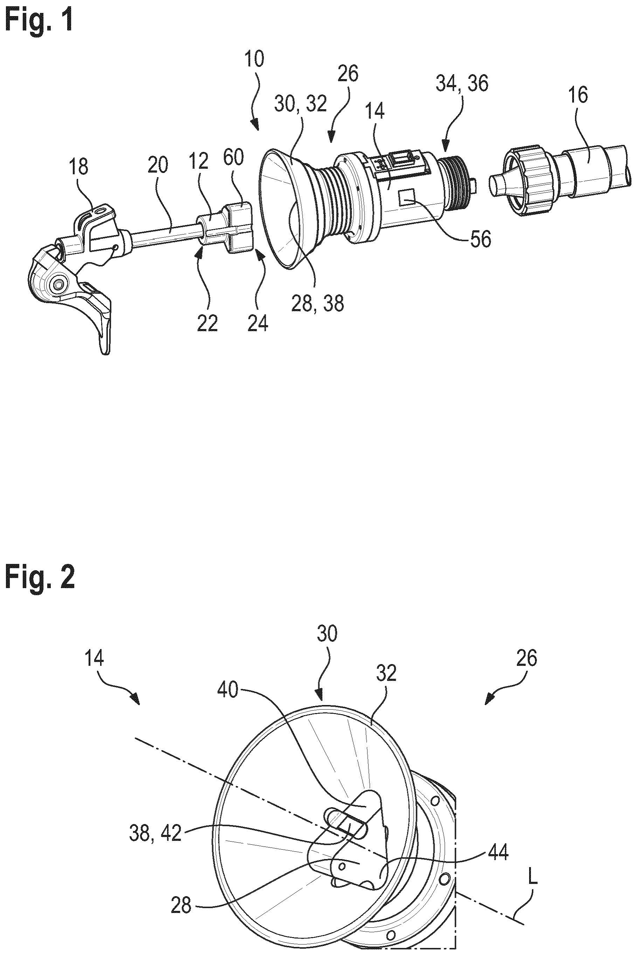

In Figur 1 ist eine Montageeinheit 10 dargestellt, mit der eine Leitung wie eine Freileitung einer Hoch- oder Mittelspannungsanlage geerdet und kurzgeschlossen werden kann.

Die Montageeinheit 10 umfasst einen Klemmenadapter 12 und ein Werkzeugmodul 14.

Der Klemmenadapter 12 und der Werkzeugmodul 14 sind mechanisch miteinander koppelbar, indem sie ineinandergesteckt werden, sodass eine drehfeste Verbindung zwischen Klemmenadapter 12 und Werkzeugmodul 14 hergestellt werden kann, wie nachfolgend noch detailliert erläutert wird.

Über die drehfeste Verbindung kann ein Drehmoment von einer Erdungsstange 16 auf eine Klemme 18 einer Kurzschlussvorrichtung übertragen werden, die mit dem Klemmenadapter 12 gekoppelt ist, wie aus Figur 1 deutlich wird.

Die Erdungsstange 16 ist isoliert, verlängerbar und drehbar, sodass ein Monteur ein Drehmoment über die Montageeinheit 10 auf die Klemme 18 übertragen kann.

Bei der Klemme 18 kann es sich entweder um eine Erdungsklemme oder um eine Phasenklemme einer Kurzschlussvorrichtung handeln. Als Klemme 18 können alle in einer Kurzschlussvorrichtung üblicherweise vorkommende Klemmen 18 verwendet werden.

Zum Montieren oder Demontieren der Klemme 18 wird diese entweder direkt mit dem Werkzeugmodul 14 gekoppelt oder indirekt über den Klemmenadapter 12 mit dem Werkzeugmodul 14 verbunden, wie es in der Ausführungsform aus Figur 1 der Fall ist.

Genauer gesagt wird eine Gewindespindel 20 der Klemme 18, über die die Klemme 18 von einem geöffneten Zustand in einen geschlossenen Zustand und wieder zurück in einen geöffneten Zustand überführt werden kann, mit dem Klemmenadapter 12 verbunden.

Der Klemmenadapter 12 weist dazu eine Klemmenschnittstelle 22 auf, die mit der Gewindespindel 20 der Klemme 18 koppelbar ist. So wird die Gewindespindel 20 in dem Klemmenadapter 12 fixiert und die Gewindespindel 20 ist über den Klemmenadapter 12 bewegbar, sodass die Klemme 18 geschlossen oder geöffnet werden kann.

An dem, der Klemmenschnittstelle 22 entgegengesetzten Ende des Klemmenadapters 12 ist ein Anbindungsabschnitt 24 vorgesehen. Der Anbindungsabschnitt 24 ist dazu eingerichtet, mit dem Werkzeugmodul 14 zusammenzuwirken bzw. gekoppelt zu werden.

Der Anbindungsabschnitt 24 des Klemmenadapters 12 weist vorliegend eine dreieckige Grundform mit abgerundeten Ecken auf.

Zum Koppeln von Klemmenadapter 12 und Werkzeugmodul 14 wird der Anbindungsabschnitt 24 des Klemmenadapters 12 in eine Aufnahme 28 der Verbindungsschnittstelle 26 gesteckt. Alternativ kann der Anbindungsabschnitt 24 auch so ausgeführt sein, dass die Verbindungsschnittstelle 26 des Werkzeugmoduls 14 in den Anbindungsabschnitt 24 des Klemmenadapters 12 gesteckt wird.

Der Anbindungsabschnitt 24 und die Aufnahme 28 weisen zueinander korrespondierende Formen auf, sodass eine mechanisch drehfeste Verbindung zwischen dem Werkzeugmodul 14 und dem Klemmenadapter 12 in einem gekoppelten Zustand vorliegt. Mit anderen Worten hat die Aufnahme 28 vorliegend eine Grundform, die dem Anbindungsabschnitt 24 des Klemmenadapters 12 entspricht. Dadurch ist ein Verdrehen des Werkzeugmoduls 14 relativ zum Klemmenadapter 12 nicht möglich. Auf die Ausgestaltung der Verbindungsschnittstelle 26 und die Aufnahme 28 wird später mit Bezug auf Figur 2 weiter eingegangen.

Um das Ineinanderstecken von Werkzeugmodul 14 und Klemmenadapter 12 zu vereinfachen, weist das Werkzeugmodul 14 an einem Ende 30 einen Fangtrichter 32 auf. Der Fangtrichter 32 schließt sich damit an die Aufnahme 28 des Werkzeugmoduls 14 an und ist Teil der Verbindungsschnittstelle 26.

An einem, der Verbindungsschnittstelle 26 entgegengesetzten Ende 34 des Werkzeugmoduls 14 ist eine Handhabungsschnittstelle 36 vorgesehen, über die das Werkzeugmodul 14 mit der Erdungsstange 16 verbunden werden kann. Die Erdungsstange 16 kann dabei an die Handhabungsschnittstelle 36 des Werkzeugmoduls 14 angeschraubt werden.

Letztendlich führt damit eine Drehung der Erdungsstange 16 zu einer Zustandsänderung der Klemme 18, wenn die Montageeinheit 10 mit der Klemme 18 gekoppelt ist, da die Gewindespindel 20 verdreht wird.

Um jedoch zu verhindern, dass die Klemme 18 geöffnet oder geschlossen werden kann, wenn beispielsweise eine Montagereihenfolge der Kurzschlussvorrichtung nicht eingehalten wird, indem beispielsweise eine Phasenklemme vor einer Erdungsklemme montiert oder eine Erdungsklemme vor der Phasenklemme demontiert werden soll, weist die Verbindungsschnittstelle 26 des Werkzeugmoduls 14 eine Verriegelung 38 im Bereich der Verbindungsschnittstelle 26 auf.

Die Verriegelung 38 ist besonders gut in den Figuren 2 bis 4 zu sehen. Grundsätzlich ist die Verriegelung 38 dazu eingerichtet, die Verbindungsschnittstelle 26 des Werkzeugmoduls 14 in einem ersten Betriebszustand freizugeben, sodass hierüber die Klemme 18 direkt oder indirekt koppelbar ist, und in einem zweiten Betriebszustand zu blockieren, um ein Koppeln der Klemme 18 zu verhindern.

Im Detail bedeutet das, dass im zweiten Betriebszustand die Verbindungsschnittstelle 26 bzw. die Aufnahme 28 durch die Verriegelung 38 blockiert wird, sodass der Klemmenadapter 12 nicht in die Aufnahme 28 einsteckbar ist. Die Verriegelung 38 kann in dem zweiten Betriebszustand einen axialen Anschlag für den Klemmenadapter 12 ausbilden.

Aus Figur 2 geht auch hervor, dass die Verriegelung 38 die Verbindungsschnittstelle 26 nicht vollständig blockiert, sondern sich lediglich abschnittsweise aus seitlichen Wänden 40 der Aufnahme 28 in die Aufnahme 28 hineinragen kann, um den Aufnahmequerschnitt zu verändern. Dadurch lässt sich der Klemmenadapter 12 jedoch nicht in die Aufnahme 28 stecken.

Im ersten Betriebszustand, in dem die Aufnahme 28 von der Verriegelung 38 freigegeben ist und welcher in den Figuren 2 bis 4 gezeigt ist, lässt sich der Klemmenadapter 12 in die Aufnahme 28 einsetzen und mit der Verbindungsschnittstelle 26 koppeln, sodass eine mechanisch drehfeste Verbindung zwischen Werkzeugmodul 14 und Klemmenadapter 12 im gekoppelte Zustand vorliegt.

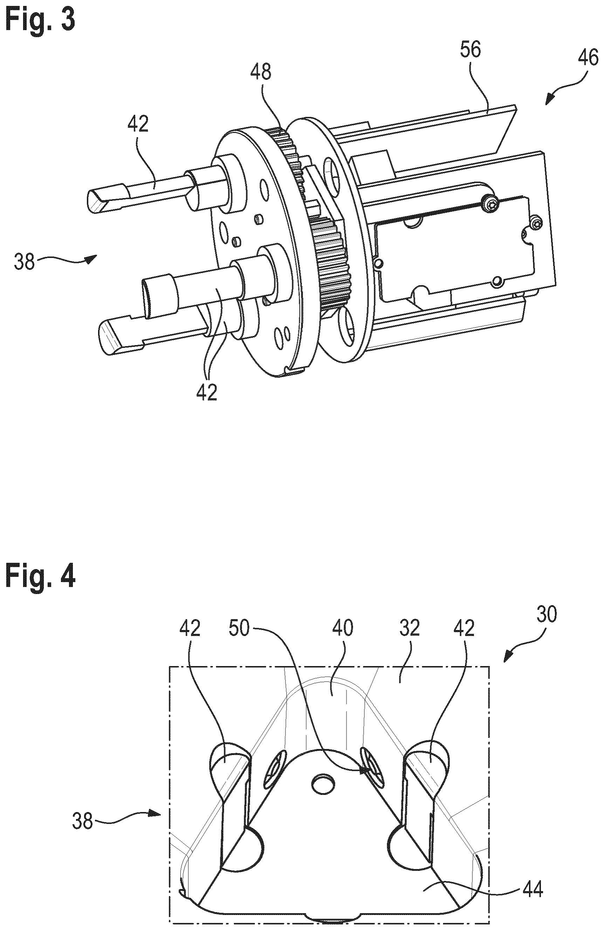

Die Verriegelung 38 weist in der gezeigten Ausführungsform drei Verriegelungselemente 42 auf, die jeweils als Halbstifte ausgebildet sind, was insbesondere aus Figur 3 deutlich wird.

Die Verriegelungselemente 42 sind so angeordnet, dass sie sich entlang einer Längsachse L des Werkzeugmoduls 14 von einem Boden 44 der Aufnahme 28 in Richtung des Fangtrichters 32 erstrecken.

Die Verriegelungselemente 42 sind dabei so angeordnet, dass sie in parallel zur Längsachse L des Werkzeugmoduls 14 ausgebildeten Ausnahmen in der Aufnahme 28 der Verbindungsschnittstelle 26 verlaufen, insbesondere in den seitlichen Wänden 40 der Aufnahme 28.

Der Boden 44 der Aufnahme 28 weist eine dreieckige Grundform auf, sodass die Aufnahme 28 seitlich durch drei seitliche Wände 40 begrenzt wird. Jede der drei Wände 40 ist parallel zur Längsachse L des Werkzeugmoduls 14 und weist eine entsprechende Ausnahme für ein Verriegelungselement 42 auf.

Die Verriegelungselemente 42 sind hier mittig in den seitlichen Wänden 40 angeordnet und weisen in Wesentlichen eine Höhe auf, die der Tiefe der Aufnahme 28 der Verbindungsschnittstelle 26 entspricht. Somit würde im zweiten Betriebszustand des Werkzeugmoduls 14 bereits am äußersten Ende der Verbindungsschnittstelle 26 ein Einstecken des Klemmenadapters 12 in das Werkzeugmodul 14 verhindert.

Die Verriegelungselemente 42 weisen einen halbkreisförmigen Querschnitt auf, sodass sie in der ersten Betriebsposition bündig mit den seitlichen Wänden 40 abschließen, während sie im zweiten Betriebszustand so gedreht sind, dass ihre Rundung aus der jeweiligen seitlichen Wand 40 in die zugeordnete Ausnahme in der Aufnahme 28 ragt, um die Grundform der Aufnahme 28 vollständig freizugeben. Durch den halbkreisförmigen Querschnitt lassen sich die Verriegelungselemente 42 besonders effektiv drehen und sind gleichzeitig platzsparend.

Alternativ oder ergänzend können die Verriegelungselemente 42 auch so angeordnet sein, dass sie zumindest teilweise im Boden 44 der Aufnahme 28 vorgesehen sind und beispielsweise aus dem Boden 44 im zweiten Betriebszustand hervorragen, um ein Koppeln zu verhindern bzw. zu blockieren.

Aus Figur 3 geht hervor, dass die Verriegelungselemente 42 über einen Antrieb 46 mechanisch verstellbar sind. Der Antrieb 46 ist dabei zentral im Werkzeugmodul 14 eingebaut und ist vorzugsweise ein elektrischer Motor. Somit handelt es sich bei der Verriegelung 38 um eine elektromechanische Verriegelung.

Der Antrieb 46 wirkt dabei mit der Verriegelung 38 bzw. den Verriegelungselementen 42 zusammen und ist dazu eingerichtet, die Verriegelung 38 zwischen dem ersten Betriebszustand und dem zweiten Betriebszustand zu verstellen.

Genauer gesagt werden die Verriegelungselemente 42 durch den Antrieb 46 jeweils um 180° gedreht, sodass sie je nachdem, in welcher Position sich die Verriegelungselemente 42 befinden, zumindest teilweise die Aufnahme 28 blockieren.

Beim Verstellen werden alle drei Verriegelungselemente 42 synchron über ein Getriebe 48 verstellt. Dazu wird das Getriebe 48 von dem Antrieb 46 angetrieben und dreht jedes Verriegelungselement 42 um 180°, sodass sie sich in die Aufnahme 28 hineinerstrecken, um den Aufnahmequerschnitt zu verkleinern. Folglich kann die Klemme 18 nicht mit dem Werkzeugmodul 14 gekoppelt werden.

In Figur 4 sind neben den Verriegelungselementen 42 auch noch zwei Drucksensoren 50 zu sehen. Die Drucksensoren 50 befinden sich zwischen den Verriegelungselementen 42 und einer Ecke der Aufnahme 28. Die Drucksensoren 50 sind dabei an gegenüberliegenden seitlichen Wänden 40 der Aufnahme 28 angeordnet. Insgesamt können in der Aufnahme 28 bis zu sechs Drucksensoren 50 angeordnet sein. Über die Anzahl der Drucksensoren 50 kann eine Redundanz geschaffen bzw. die Genauigkeit erhöht werden.

Mit Hilfe der Drucksensoren 50 lässt sich das aktuell zwischen Klemmenadapter 12 und Werkzeugmodul 14 übertragene Drehmoment ermitteln.

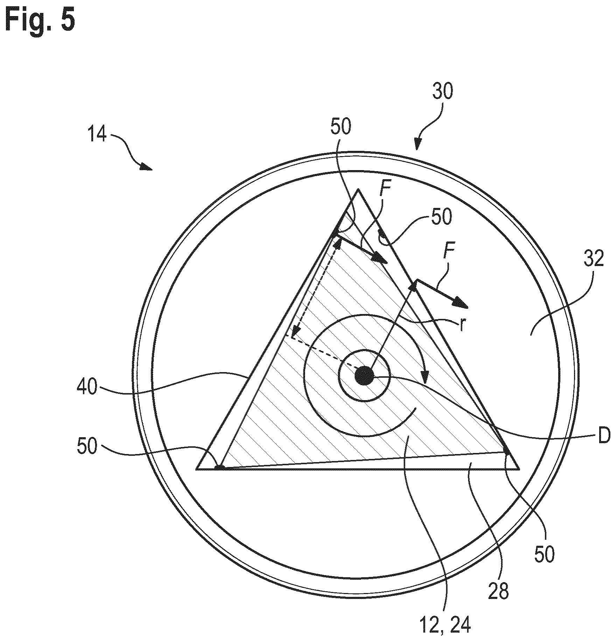

Das Funktionsprinzip der Drucksensoren 50 ist in Figur 5 dargestellt. Bei einer Drehung des Werkzeugmoduls 14 gegen den Klemmenadapter 12 drückt der Klemmenadapter 12 auf die Wände 40 der Aufnahme 28 und die darin eingebauten Drucksensoren 50.

Der Drucksensor 50 misst den auf ihn ausgeübten Druck p. Aus dem gemessenen Druck p zusammen mit der ebenfalls bekannten Kontaktfläche A zwischen Klemmenadapter 12 und Werkzeugmodul 14, die im Wesentlichen der Oberfläche des Drucksensors 50 entspricht, kann die ausgeübten Kraft F ermittelt werden.

Aus dem ermittelten Kraft F kann anschließend zusammen mit dem Radius r, der dem Abstand des Drucksensors 50 von der Drehachse D des Klemmenadapters 12 entspricht, das Drehmoment θ berechnet werden. Damit kann aus dem mit dem Drucksensor 50 gemessenen Druck p die Kraft F nach F=p*A berechnet werden. Das Drehmoment ergibt sich dann aus der Kraft F und dem Abstand r nach der Formel θ=F*r.

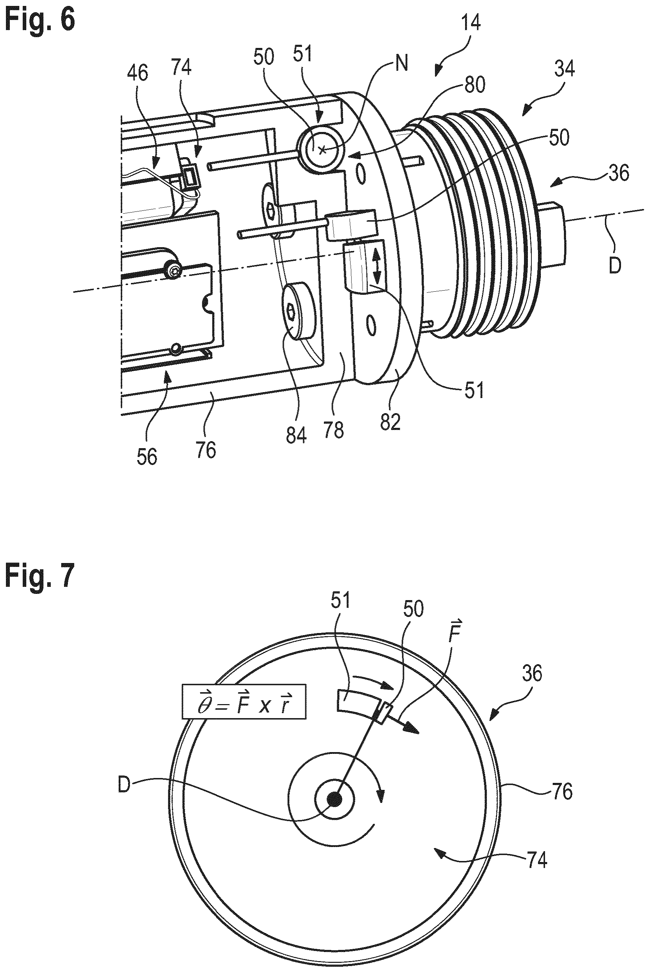

Alternativ oder ergänzend zu den Drucksensoren 50 im Bereich der Verbindungsschnittstelle 26 können Drucksensoren 50 im Bereich eines Fußpunkts des Werkzeugmoduls 14 angeordnet sein, also im Bereich der Handhabungsschnittstelle 36, über die das Werkzeugmodul 14 mit der Erdungsstange 16 verbindbar ist. Dies ist in Figur 6 gezeigt.

Die Drucksensoren 50 können in einem Bereich des Werkzeugmoduls 14 angeordnet sein, der beim Übertragen eines Drehmoments geringfügig relativ zu einem Endanschlag 51 verdrehbar ist. Insbesondere sind zwei Endanschläge 51 vorgesehen, nämlich für jede Drehrichtung jeweils ein Endanschlag 51.

Der jeweilige Drucksensor 50 und der zugehörige Endanschlag 51 können so zueinander ausgerichtet sein, dass sie jeweils senkrecht zur Drehachse D orientiert sind. Mit anderen Worten ist eine Normale N einer Sensorfläche des jeweiligen Drucksensors 50, über die der Drucksensor 50 mit dem Endanschlag 51 zusammenwirkt, senkrecht zur Drehachse D. Das entsprechende Funktionsprinzip der in Figur 6 gezeigten Anordnung ergibt sich aus Figur 7.

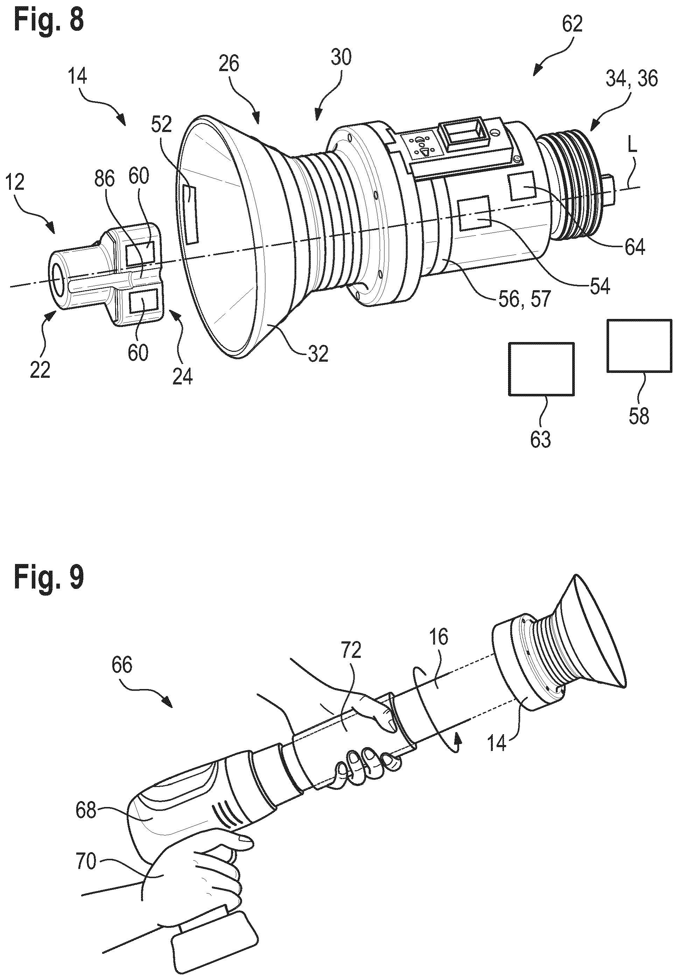

Neben dem Drucksensor 50 weist das Werkzeugmodul 14 in der gezeigten Ausführungsform einen weiteren Sensor auf, nämlich einen elektrischen Felddetektor 52. Dieser ist in Figur 8 schematisch dargestellt.

Der elektrische Felddetektor 52 führt beim Annähern an die Freileitung eine Messung auf Spannungsfreiheit durch. Im Falle eines Fehlers, wie bei einer vertauschten Leitung oder bei einer fehlenden Spannungsfreiheit, kann der Felddetektor 52 bereits bei der Annäherung an die Freileitung ein hiervon ausgehendes elektrisches Feld detektieren, und damit vor dem Entstehen eines potenziell gefährlichen Lichtbogens ein Signal erzeugen, das von Werkzeugmodul 14 über eine Ausgabeeinheit 54 ausgegeben wird und einen Monteur warnt.

Der Felddetektor 52 kann am Ende des Fangtrichters 32 angeordnet sein, also an dem während der Verwendung zur Freileitung weisenden Ende des Werkzeugmoduls 14.

Die Ausgabeeinheit 54 kann eine haptische, akustische und/oder optische Ausgabeeinheit sein, beispielswese ein Vibrationselement, ein Lautsprecher oder ein Leuchtelement bzw. ein Display, worüber ein Warnlicht oder eine Nachricht ausgegeben wird.

Ferner weist das Werkzeugmodul 14 eine Kommunikationseinheit 56 auf, die dazu eingerichtet ist, einen der Klemme 18 zugeordneten Klemmenparameter zu erfassen.

Abhängig vom erfassten Klemmenparameter wird die Verbindungsschnittstelle 26 des Werkzeugmoduls 14 blockiert oder freigegeben, indem die Verriegelung 38 entweder in die Aufnahme 28 eingefahren oder aus dieser herausgefahren wird, wie vorstehend erläutert.

Der Klemmenparameter ist eine Identifizierung, eine Art und/oder ein Zustand der Klemme 18 und/oder eine Seriennummer der Klemme 18.

Die Kommunikationseinheit 56 weist einen schleifen- bzw. ringförmigen Leiter 57 auf, der am Werkzeugmodul 14 angebracht ist. Der in Figur 6 gezeigte schleifen- bzw. ringförmige Leiter 57 fungiert als eine (NFC-)Antenne.

Die Kommunikationseinheit 56 ist dazu eingerichtet, Sensordaten und/oder Signale zu senden und/oder zu empfangen. Sie weist daher einen Sender und/oder einen Empfänger auf.

Die Kommunikationseinheit 56 kann Daten der Drucksensoren 50 und der elektrischen Felddetektoren 52 empfangen und/oder Daten, beispielsweise Daten zu einem Anzugdrehmoment, mit dem die Klemme 18 an der Leitung fixiert werden soll oder wurde, an einen externen Speicher 58 senden.

Auch ein von den Drucksensoren 50 gemessener Druck oder eine berechnete Kraft kann die Kommunikationseinheit 56 an den Speicher 58 senden.

In dem Speicher 58 sind neben den Sensordaten und dem Anzugdrehmoment auch alle Klemmenparameter aller in der Kurzschlussvorrichtung verbauten Klemmen 18 gespeichert.

Die Kommunikationseinheit 56 kann die im Speicher 58 gespeicherten Daten jederzeit abrufen bzw. auslesen.

Die Kommunikationseinheit 56 kann ferner mit dem Klemmenadapter 12 kommunizieren, genauer gesagt mit einem Identifikationsmittel 60 des Klemmenadapters 12.

Das Identifikationsmittel 60 befindet sich im Bereich des Anbindungsabschnitts 24 des Klemmenadapters 12 und umfasst nichtflüchtige elektronische Speicherelemente, die per drahtloser Kommunikation, beispielsweise Nahfeldkommunikation (NFC-Tag), aktiviert, erkannt, gelesen und/oder beschrieben werden können.

Im Identifikationsmittel 60 der Klemme 18 ist beispielsweise die Seriennummer der Klemme 18 sowie die Seriennummer der gesamten Kurzschlussvorrichtung mit mindestens zwei Klemmen 18 hinterlegt. Darüber hinaus ist auf dem Identifikationsmittel 60 auch die Klemmenfunktion und der aktuelle Zustand der Klemme 18 gespeichert.

Das Identifikationsmittel 60 des Klemmenadapters 12 stellt also der Kommunikationseinheit 56 verschiedene Daten über die Klemme 18 und die Kurzschlussvorrichtung zur Verfügung.

Die Kommunikationseinheit 56, die als Antenne für NFC Kommunikation ausgebildet ist, ist dazu eingerichtet, das Identifikationsmittel 60 des Klemmenadapters 12 auszulesen und so alle notwendigen Daten zu erhalten, die das Werkzeugmodul 14 braucht, um die Verriegelung 38 richtig anzusteuern.

Alternativ oder zusätzlich kann die Kommunikationseinheit 56 das Identifikationsmittel 60 des Klemmenadapters 12 auch beschreiben und so beispielsweise den aktuellen Zustand der Klemme 18, also offen oder geschlossen, oder die aktuelle Position der Klemme 18 auf dem Identifikationsmittel 60 überschreiben, aktualisieren und speichern.

Zusätzlich zu den Funktions- und Zustandsdaten der Klemme 18 ist auch ein Zählerstand für die durchgeführten Montage- und Demontagezyklen auf dem Identifikationsmittel 60 der Klemme 18 gespeichert. Dazu wird zunächst der aktuelle Zählerstand von der Kommunikationseinheit 56 des Werkzeugmoduls 14 von dem Identifikationsmittel 60 der Klemme 18 ausgelesen. Nach einer Zustandsänderung der Klemme 18, also nach der Bewegung der Gewindespindel 20 der Klemme 18, wird der neue Zählerstand auf dem Identifikationsmittel 60 gespeichert.

Zusätzlich werden auch weitere Zählerstände auf dem Identifikationsmittel 60 gespeichert und von diesem ausgelesen, wie beispielsweise die Anzahl elektronisch erkannten mechanischen oder elektrischen Fehler oder ein Betriebsstundenzähler.

Das Werkzeugmodul 14 zusammen mit dem Klemmenadapter 12 und dem externen Speicher 58 stellen dabei das in Figur 6 dargestellte Montagesystem 62 dar.

Neben dem Speicher 58 und dem Identifikationsmittel 60 kann die Kommunikationseinheit 56 auch mit einem mobilen Endgerät 63 gekoppelt sein. Das mobile Endgerät 63 kann dabei ein Teil des dargestellten Montagesystems 62 sein.

Das mobile Endgerät 63 ist beispielsweise ein Smartphone oder ein Tablet. Über eine drahtlose Kommunikationsverbindung beispielsweise über Bluetooth-Low-Energy BLE, ZigBee oder Wifi kann die Kommunikationseinheit 56 Klemmenparameter, Sensordaten oder Zählerstände von dem Werkzeugmodul 14 auf das mobile Endgerät 63 übertragen oder vom mobilen Endgerät 63 abfragen. Darüber hinaus lassen sich auch die Ladezustände der Batterie des Werkzeugmoduls 14 oder andere wesentliche Betriebsparameter erfassen, protokollieren und darstellen. Betriebsparameter, wie die Verstärkung und die Warnschwelle des elektrischen Feldsensors lassen sich ebenfalls vom mobilen Endgerät 63 aus im Werkzeugmodul 14 einstellen.

Zusammen mit dem Datentransfer an das mobile Endgerät 63 sind auch Server- oder Cloud Applikationen der Montageeinheit 10 bzw. des Werkzeugmoduls 14 möglich. Beispielsweise können digitale Arbeitspläne mit Dokumentation der erfolgreich durchgeführten (De-)Montageschritten der Klemmen 18 bzw. der Kurzschlussvorrichtung gespeichert und übertragen werden, das Anzugsdrehmoment der Klemmen 18 im Arbeitsplan protokolliert werden, die Monteure bei ihrer Arbeit angeleitet werden, Klemmen 18 bzw. Kurzschlussvorrichtungen mit Hilfe von GPS- Koordinaten auf dem mobilen Endgerät 63 lokalisiert werden oder Wartungspläne mit Unterstützung der Klemmen 18 eingeführt und protokolliert werden.

Das mobile Endgerät 63 kann grundsätzlich als Ausgabegerät dienen.

Darüber hinaus ist die Kommunikationseinheit 56 informationsaustauschend mit einer Auswerteeinheit 64 verbunden und gekoppelt. Die Auswerteeinheit 64 kann sich innerhalb des Werkzeugmoduls 14 befinden, wie dies in Figur 6 gezeigt ist, sie kann sich aber auch außerhalb des Werkzeugmoduls 14 befinden und mit diesem über eine drahtlose Kommunikationsverbindung verbunden sein, beispielsweise als Cloud-Anwendung auf einem Server.

Die Auswerteeinheit 64 ist dazu eingerichtet, den bzw. die der Klemme 18 zugeordneten Klemmenparameter auszuwerten, um so die Klemme 18 zu identifizieren und ein Auswerteergebnis auszugeben. Abhängig von dem Auswerteergebnis werden dann die Verriegelungselemente 42 angesteuert, sodass sie die Verbindungsschnittstelle 26 freigeben oder nicht. Bei einer freigegebenen Verbindungsschnittstelle 26 können der Klemmenadapter 12 und das Werkzeugmodul 14 miteinander koppeln und die Klemme 18 geöffnet oder geschlossen werden.

Wie in Figur 9 gezeigt ist, kann eine Montageunterstützung 66 mit dem Werkzeugmodul 14, genauer gesagt mit der Erdungsstange 16, gekoppelt werden, um das Öffnen oder Schließen der Klemme 18 zu erleichtern.

Die Montageunterstützung 66 erzeugt ein Drehmoment, sodass die mit dem Werkzeugmodul 14 gekoppelte Klemme 18 angezogen oder gelöst werden kann.

Die Montageunterstützung 66 weist einen elektrischen Motor 68 mit einer Getriebeübersetzung und/oder eine elektronische Drehzahl-/Drehmomentregelung auf. Der Motor 68 der Montageunterstützung 66 ist in einem Bereich der Erdungsstange 16 angeordnet, die sich in der Nähe des Monteurs 70 befindet, wie in einer Handhabe 72 der Erdungsstange 16. Dadurch wird das Gewicht des Motors 68 zum Monteur 70 hin verlagert.

Zwischen der Montageunterstützung 66 und der Kommunikationseinheit 56 des Werkzeugmoduls 14 besteht eine drahtlose Kommunikationsverbindung, sodass das Werkzeugmodul 14 beispielsweise das gewünschte Anzugsdrehmoment an die Montageunterstützung 66 übertragen kann.

Wie aus der in Figur 6 gezeigten Ausführungsform hervorgeht, weist das Werkzeugmodul 14 eine Elektronikraum 74 für die Elektronik auf, bspw. die Kommunikationseinheit 56, eine Steuerung, den Antrieb 46 und/oder eine Batterie. Der Elektronikraum 74 ist in einem Gehäuseteil 76 angeordnet, das einen Boden 78 aufweist, in dem die Drucksensoren 50 angeordnet sind, insbesondere in Aussparungen 80 des Bodens 78.

An den Boden 78 des Gehäuseteils 76, was den Elektronikraum 74 umgibt, schließt sich ein Flansch 82 an, an dem die Endanschläge 51 angeordnet sind. Die Endanschläge 51 sind an einem Ende des Flansches 82 vorgesehen, was zur Handhabungsschnittstelle 36 entgegengesetzt ist.

Das Gehäuseteil 76 ist mit dem Flansch 82 über Befestigungsmittel 84 derart verbunden, dass eine geringfügige Relativverdrehung zwischen dem Gehäuseteil 76 und dem Flansch 82 möglich ist, wodurch eine entsprechende Kraft von den Endanschlägen 51 auf die Drucksensoren 50 ausgeübt werden kann, wenn eine Drehung des Werkzeugmoduls 12 erfolgt.

Wie vorstehend schon erläutert, können die Drucksensoren 50 grundsätzlich durch andersartige Sensoren ersetzt werden, die eingerichtet sind, ein Drehmoment direkt oder einen Parameter zu erfassen, basierend auf dem auf das Drehmoment zurückgeschlossen werden kann.

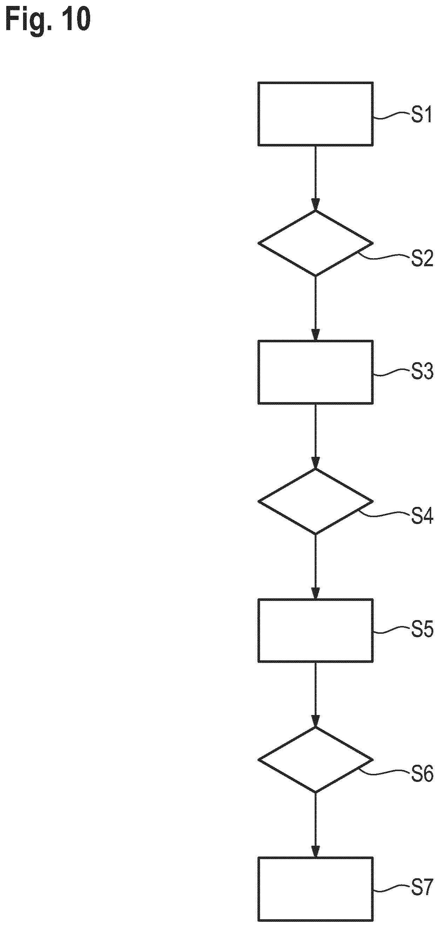

Figur 10 zeigt das Verfahren zum Montieren oder Demontieren einer Klemme 18 der Kurzschlussvorrichtung zum Erden und Kurzschließen einer Leitung einer Hoch- oder Mittelspannungsanlage.

In einem ersten Schritt S1 wird das Werkzeugmodul 14 bereitgestellt. Das Werkzeugmodul 14 befindet sich dabei in einem zweiten Betriebszustand, in dem die Verbindungsschnittstelle 26 durch die Verriegelung 38 mit ihren Verriegelungselementen 42 blockiert ist.

An dem Werkzeugmodul 14 kann bereits die Erdungsstange 16 angeschlossen sein. Die Erdungsstange 16 kann auch bereits mit der Montageunterstützung 66 verbunden sein.

In einem zweiten Schritt S2 wird die Klemme 18, die mit dem zugeordneten Klemmenadapter 12 gekoppelt ist, an das Werkzeugmodul 14 angenähert. Dabei reicht eine Annäherung auf beispielsweise 10 cm aus, damit die Kommunikationseinheit 56 des Werkzeugmoduls 14 den Klemmenadapter 12 bzw. sein Identifikationsmittel 60 zuverlässig erkennt und auslesen kann.

In einem dritten Schritt S3 wird mindestens ein Klemmenparameter aus dem Identifikationsmittel 60 des Klemmenadapters 12 mit der Kommunikationseinheit 56 des Werkzeugmoduls 14 ausgelesen.

In einem vierten Schritt S4 wird der ausgelesene Klemmenparameter mit der Auswerteeinheit 64 des Werkzeugmoduls 14 ausgewertet und es wird ein Auswerteergebnis erzeugt.

Abhängig von dem Auswerteergebnis und damit letztendlich auch abhängig von dem Klemmenparameter, wird in einem fünften Schritt S5 entweder die Verriegelung 38 so angesteuert, dass sie die Verbindungsschnittstelle 26 freigibt, oder die Verriegelung 38 wird in ihrer Position belassen, sodass die Verbindungsschnittstelle 26 weiterhin blockiert ist. Die Freigabe der Verbindungsschnittstelle 26 erfolgt nur, wenn die in der Montage-Reihenfolge bzw. Demontage-Reihenfolge richtige Klemme 18 ausgewählt worden ist, was über den Klemmenparameter festgestellt wird.

In einem sechsten Schritt S6, sofern die richtige Klemme 18 ausgewählt worden ist und die Verbindungsschnittstelle 26 freigegeben wurde, wird der Klemmenadapter 12 mit dem Werkzeugmodul 14 bei freigegebener Verbindungsschnittstelle 26 gekoppelt.

Für den Fall, dass die Verbindungsschnittstelle 26 in Schritt S5 nicht freigegeben wurde, kann keine Kopplung erfolgen. Stattdessen kann beispielsweise ein haptisches, akustisches und/oder optisches Warnsignal, also beispielsweise in Form einer Vibration, eines Warntons oder eines optischen Warnsignals, über die Ausgabeeinheit 54 ausgegeben werden, wenn beispielsweise die Montagereihenfolge nicht eingehalten wurde oder Klemmen 18 vertauscht wurden. Die Ausgabe kann auch entsprechend über das mobile Endgerät 63 erfolgen.

In einem siebten Schritt S7 wird die Verriegelung 38 nach dem Koppeln des Werkzeugmoduls 14 mit dem Klemmenadapter 12 gesperrt. Dazu weist der Klemmenadapter 12 in der gezeigten Ausführungsform Vertiefungen 86 in seiner Außenoberfläche auf, in die die Verriegelungselemente 42 eingreifen können, wenn diese entsprechend vom Antrieb 46 verstellt werden, nämlich in die Sperrstellung. Somit ist eine drehfeste mechanische Verbindung zwischen der Klemme 18 und dem Werkzeugmodul 14 hergestellt und die Klemme 18 kann an die Leitung montiert oder von dieser demontiert werden.

Hierzu kann, wie vorstehend schon erläutert, ein Drehmoment angelegt werden, um die Gewindespindel 20 der Klemme 18 zu verstellen, also die Klemme 18 anzuziehen.

Die Sperrstellung der Verriegelungselemente 42 entspricht im Übrigen der Blockierstellung der Verriegelungselemente 42, also der Stellung im zweiten Betriebszustand. Die Sperrstellung und die Blockierstellung unterscheiden sich demnach nur darin, ob die Klemme 18 bzw. der zugehörige Klemmendadapter 12 in der Aufnahme 28 des Werkzeugmoduls 14 eingesetzt ist (Sperrstellung) oder nicht (Blockierstellung).

Beim Montieren bzw. Demontieren der Klemme 18 kann über die Drucksensoren 50 das entsprechende Drehmoment ermittelt werden, wie vorstehend schon erläutert.

## Patentansprüche

1. Werkzeugmodul (14) für das Erden und Kurzschließen einer Leitung einer Hoch- oder Mittelspannungsanlage mittels mindestens einer Klemme (18), wobei das Werkzeugmodul (14) eine Verbindungsschnittstelle (26) aufweist, über die die Klemme (18) koppelbar ist, wobei das Werkzeugmodul (14) eine drahtlose Kommunikationseinheit (56) aufweist, die dazu eingerichtet ist, mindestens einen der Klemme (18) zugeordneten Klemmenparameter zu erfassen, und wobei das Werkzeugmodul (14) dazu eingerichtet ist, in Abhängigkeit von dem über die Kommunikationseinheit (56) erfassten mindestens einen Klemmenparameter die Verbindungsschnittstelle (26) zu blockieren oder freizugeben.

2. Werkzeugmodul nach Anspruch 1, **dadurch gekennzeichnet, dass** die Kommunikationseinheit (56) einen schleifen- bzw. ringförmigen Leiter (57) aufweist, der am Werkzeugmodul (14) angebracht ist, insbesondere wobei der schleifen- bzw. ringförmige Leiter (57) als eine NFC-Antenne fungiert.

3. Werkzeugmodul (14) nach Anspruch 1 oder 2, **dadurch gekennzeichnet, dass** das Werkzeugmodul (14) eine Auswerteeinheit (64) aufweist, die mit der Kommunikationseinheit (56) gekoppelt und dazu eingerichtet ist, den der Klemme (18) zugeordneten Klemmenparameter auszuwerten, um die Klemme (18) zu identifizieren.

4. Werkzeugmodul (14) nach einem der vorhergehenden Ansprüche, **dadurch gekennzeichnet, dass** das Werkzeugmodul (14) im Bereich der Verbindungsschnittstelle (56) eine Verriegelung (38) aufweist, die dazu eingerichtet ist, in Abhängigkeit von dem über die Kommunikationseinheit (56) erfassten Klemmenparameter die Verbindungsschnittstelle (26) zu blockieren oder freizugeben, insbesondere wobei das Werkzeugmodul (14) einen Antrieb (42) aufweist, der mit der Verriegelung (38) zusammenwirkt und basierend auf dem Auswerteergebnis der Auswerteeinheit (64) angesteuert ist.

5. Werkzeugmodul (14) nach einem der vorhergehenden Ansprüche, **dadurch gekennzeichnet, dass** das Werkzeugmodul (14) mindesten einen Sensor aufweist, insbesondere elektrischen Felddetektor (52), der eingerichtet ist, ein elektrisches Feld zu detektieren, und/oder einen Drucksensor (50), der dazu eingerichtet ist, einen Druck, der auf das Werkzeugmodul (14) ausgeübt wird, zu detektieren.

6. Werkzeugmodul (14) nach einem der vorhergehenden Ansprüche, **dadurch gekennzeichnet, dass** die Kommunikationseinheit (56) zudem eingerichtet ist, Sensordaten und/oder Signale zu senden und/oder zu empfangen, insbesondere ein Anzugsdrehmoment, einen Druck, eine Kraft, und/oder ein elektrisches Feld.

7. Montageeinheit (10) für das Erden und Kurzschließen einer Leitung einer Hoch- oder Mittelspannungsanlage mittels einer Klemme (18), wobei die Montageeinheit (10) mindestens einen Klemmenadapter (12) und das Werkzeugmodul (14) nach einem der vorhergehenden Ansprüche umfasst, wobei der Klemmenadapter (12) ein Identifikationsmittel (60) aufweist, das den Klemmenparameter bereitstellt, und wobei die Kommunikationseinheit (56) dazu eingerichtet ist, das Identifikationsmittel (60) des Klemmenadapters (12) auszulesen.

8. Montageeinheit (10) nach Anspruch 7, **dadurch gekennzeichnet, dass** die Kommunikationseinheit (56) des Werkzeugmoduls (14) eingerichtet ist, das Identifikationsmittel (60) des Klemmenadapters (12) zu beschreiben.

9. Verfahren zum mechanischen Koppeln eines Werkzeugmoduls (14) mit einer Klemme (18) zum Erden und Kurzschließen einer Leitung einer Hoch- oder Mittelspannungsanlage, wobei das Verfahren die folgenden Schritte aufweist:
- Bereitstellen eines Werkzeugmoduls (14) nach einem der Ansprüche 1 bis 6;
- Annähern eines mit der Klemme (18) gekoppelten Klemmenadapters (12) an das Werkzeugmodul (14);
- Auslesen von mindestens einem Klemmenparameter aus einem Identifikationsmittel (60) des Klemmenadapters (12) mittels der Kommunikationseinheit (56); und
- Auswerten des mindestens einen Klemmenparameters mit einer Auswerteeinheit (64) des Werkzeugmoduls (14).

10. Verfahren nach Anspruch 9, **dadurch gekennzeichnet, dass** das Verfahren zudem die Schritte umfasst:
- Abhängig vom Auswerteergebnis entweder Ansteuern der Verriegelung (38), sodass die Verbindungsschnittstelle (26) freigegeben wird, oder Belassen der Verriegelung (38), sodass die Verbindungsschnittstelle (26) blockiert bleibt;
- Koppeln des Klemmenadapters (12) mit dem Werkzeugmodul (14) bei freigegebener Verbindungsschnittstelle (26); und
- Sperren der Verriegelung (38), sodass eine drehfeste mechanische Verbindung zwischen der Klemme (18) und dem Werkzeugmodul (14) hergestellt ist.

11. Verfahren nach einem der Ansprüche 9 oder 10, **dadurch gekennzeichnet, dass** der Klemmenparameter (12) den Zustand der Klemme (18), die Art der Klemme (18), und/oder eine Seriennummer der Klemme (18) repräsentiert.

12. Verfahren nach einem der Ansprüche 9 bis 11, **dadurch gekennzeichnet, dass** das Werkzeugmodul (14) mit einem Speicher (58) verbunden ist, in dem der Klemmenparameter der Klemme (18) gespeichert wird, insbesondere wobei der Speicher (58) ein zum Werkzeugmodul (14) externer Speicher ist und/oder im Speicher (58) Klemmenparameter einer Vielzahl von Klemmen gespeichert werden.

13. Verfahren nach Anspruch 12, **dadurch gekennzeichnet, dass** das Werkzeugmodul (14) aus dem Speicher (58) Klemmenparameter anderer Klemmen (18) abruft.

14. Verfahren nach einem der Ansprüche 9 bis 13, **dadurch gekennzeichnet, dass** die Kommunikationseinheit (56) Daten in das Identifikationsmittel (60) des Klemmenadapters (12) schreibt, insbesondere wobei die Daten repräsentativ für einen Zustand der Klemme (18) sind.

15. Montagesystem (62) mit einem Werkzeugmodul (14) nach einem der Ansprüche 1 bis 6, und einem externen Speicher (58), wobei die Kommunikationseinheit (56) eingerichtet ist, Daten von dem Speicher (58) abzufragen und/oder Daten auf dem Speicher (58) abzuspeichern.
